# EUROPÄISCHE PATENTSCHRIFT

(11) **EP 1 276 997 B1**
(45) Veröffentlichungstag und Bekanntmachung des Hinweises auf die Patenterteilung: **23.11.2005**
(21) Anmeldenummer: 01945017.0
(22) Anmeldetag: 19.04.2001
(51) Int. Cl.: F16D 57/04

(54) **HYDRODYNAMISCHER RETARDER**
HYDRODYNAMIC RETARDER
RALENTISSEUR HYDRODYNAMIQUE

(30) Priorität: 28.04.2000 DE 10020944
(43) Veröffentlichungstag der Anmeldung: 22.01.2003
(73) Patentinhaber: Voith Turbo GmbH & Co. KG, 89522 Heidenheim (DE)
(72) Erfinder: FRIEDRICH, Jürgen, 74564 Crailsheim (DE); HEILINGER, Peter, 74564 Crailsheim (DE); VOGELSANG, Klaus, 74564 Crailsheim (DE); JAEGER, Ernst-Ulrich, 89555 Steinheim (DE)
(74) Vertreter: Dr. Weitzel & Partner
(86) Internationale Anmeldenummer: PCT/EP2001/004423
(87) Internationale Veröffentlichungsnummer: WO 2001/084007

(56) Entgegenhaltungen:
- DE-B- 1 625 836
- US-A- 2 989 004

## Beschreibung

Die Erfindung betrifft einen hydrodynamischen Retarder.

Retarder dieser Art sind aus zahlreichen Veröffentlichungen bekannt. Nur beispielsweise wird auf DE 31 13 408 C1 verwiesen.

Bei der Entwicklung solcher Retarder geht es vor allem um die Steigerung des Wirkungsgrades. Auch ist man bestrebt, solche Retarder derart zu gestalten, daß sie bei verschiedenen Betriebszuständen in einer gewünschten Weise betrieben werden können. Beim Retarder ist man hauptsächlich bestrebt, eine möglichst hohe Leistungsdichte zu erzielen. Dabei strebt man eine ideale Gestaltung der am Energieaustausch beteiligten Teile an, vor allem des Rotors und des Stators.

Die erreichten Wirkungsgrade sind beachtlich. Dennoch sind weitere Verbesserungen wünschenswert.

Der Erfindung liegt die Aufgabe zugrunde, einen hydrodynamischen Retarder derart zu gestalten, daß der Wirkungsgrad weiterhin verbessert wird.

Diese Aufgabe wird durch die Merkmale des kennzeichnenden Teils des Anspruchs 1 gelöst.

Die Erfinder haben ein Merkmal erkannt, das für den Wirkungsgrad von wesentlicher Bedeutung ist. Dieses Merkmal betrifft die Gestalt der einzelnen Schaufelkante. Bekanntlich findet in einem torusförmigen Arbeitsraum eines Retarders eine nahezu kreisförmige Strömung statt. Jede Schaufelkante wird dabei auf einem Teil ihrer Länge - in achssenkrechter Richtung gesehen - vom Arbeitsmedium angeströmt, während das Arbeitsmedium auf einem anderen Teil der Schaufellänge abströmt. Es ist zwar bekannt, z.B. aus DE 1 625 836, die Schaufelkanten anzuschrägen oder anzuschärfen. Jedoch ist es überraschend, daß durch eine verhältnismäßig einfache Maßnahme eine deutliche Verbesserung erzielt werden kann. Werden nämlich die Schaufelkanten in erfindungsgemäßer Weise angeschrägt, so werden hierdurch Stoßverluste minimiert und der Wirkungsgrad wird deutlich erhöht. Gemäß der Erfindung werden die Schaufelspitzen in den An- und Abströmbereichen entsprechend dem kennzeichnenden Teil des Anspruchs 1 unterschiedlich angeschrägt.

Die Erfindung ist anhand der Zeichnung näher erläutert. Darin ist im einzelnen folgendes dargestellt:
- Figur 1: zeigt einen Retarder in schematischer Darstellung in einem Halb-Schnitt durch eine Axialebene.
- Figur 2: zeigt in perspektivischer Darstellung ein Rotorschaufelrad.
- Figur 3: zeigt eine noch weiter schematisierte Darstellung ähnlich Figur 1.
- Figur 4: zeigt einen Ausschnitt aus einem Zylinderschnitt A - A durch den Gegenstand von Figur 3.
- Figur 5: zeigt einen Ausschnitt aus einem Zylinderschnitt B - B durch den Gegenstand von Figur 3.

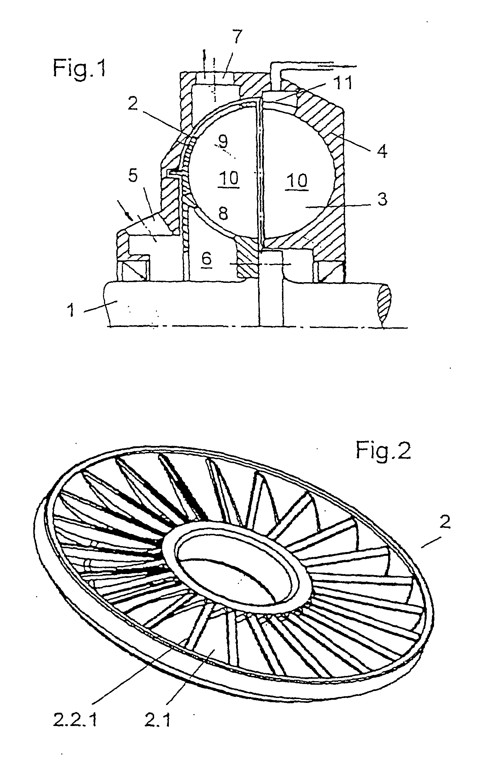

Der in Figur 1 gezeigte Retarder weist eine Antriebswelle 1 auf, auf der ein Rotor-Schaufelrad 2 aufgekeilt ist, ferner ein Stator-Schaufelrad 3, das in einem Gehäuse 4 drehfest angeordnet ist. Die Arbeitsflüssigkeit wird dem Retarder durch einen Zulaufkanal 5 über eine nicht dargestellte Steuereinrichtung zugeführt. Dabei gelangt sie zunächst in einen Verteilerraum 6. Sie wird aus einem Austrittskanal 7 wieder abgeführt. Am Rotor-Schaufelrad befinden sich im radial inneren Bereich Füllschlitze 8, sowie im radial äußeren Bereich Entleerschlitze 9, die jedoch für die Erfindung ohne Bedeutung sind. Zwischen dem Rotor- und dem Stator-Schaufelrad befindet sich ein torusförmiger Arbeitsraum 10, der über die Füll- und Entleerschlitze 8 und 9 gefüllt und entleert wird.

Das in Figur 2 gezeigte Rotor-Schaufelrad 2 läßt eine Vielzahl von Schaufeln 2.1 erkennen. Jede Schaufel 2.1 weist eine Schaufelkante 2.2.1 auf, von denen eine näher bezeichnet ist.

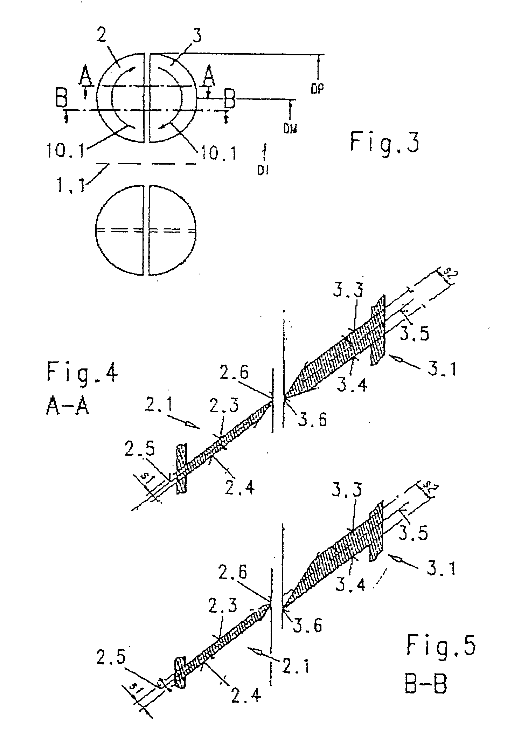

Bei der schematischen Darstellung gemäß Figur 3 erkennt man die Achse 1.1 der hier nicht dargestellten Antriebswelle, ferner das Rotor-Schaufelrad 2 und das Stator-Schaufelrad 3. In dem aus diesen beiden gebildeten torusförmigen Arbeitsraum führt das Arbeitsmedium eine Kreisströmung aus - siehe die Pfeile 10.1.

Der Retarder weist einen Profildurchmesser DP auf, ferner einen sogenannten Mittendurchmesser DM und einen Innendurchmesser DI.

Die Figuren 4 und 5 veranschaulichen die beiden Zylinderschnitte A - A und B-B.

In beiden Figuren sind links Rotorschaufeln 2.1 dargestellt, und rechts Statorschaufeln 3.1. Die Kanten der Schaufeln weisen jeweils eine Spitze auf. Sie sind in unterschiedlicher Weise angeschrägt.

Bei der Rotorschaufel 2.1 von Figur 4 ist die Spitze durch Anschrägen auf klassische Weise erzeugt. Wie man sieht, weist die Rotorschaufel 2.1 eine Dicke s1 auf. Die Schaufel ist begrenzt durch seitliche Flächen 2.3, 2.4. Dazwischen befindet sich die theoretische Schaufel-Mittelebene 2.5. Die Spitze 2.6 liegt in der Ebene der seitlichen Begrenzungsfläche 2.3.

Anders liegen die Verhältnisse bei der Statorschaufel 3.1 gemäß Figur 4. Die Statorschaufel 3.1 weist eine Dicke s2 auf. Die Spitze 3.6 befindet sich hierbei in der theoretischen Schaufelmittelebene 3.5. Es sind somit zwei Anschrägungen vorgenommen.

Der Zylinderschnitt A - A ist in einen Durchmesserbereich des Retarders gelegt, bei welchem Arbeitsmedium von der Kante der Rotorschaufel 2.1 abströmt, aber auf die Kante der Statorschaufel 3.1 anströmt.

Bei der Darstellung gemäß Figur 5 mit Zylinderschnitt B-B erkennt man wiederum die Rotorschaufel 2.1 und die Statorschaufel 3.1.

Hierbei liegen die Dinge umgekehrt wie bei der Darstellung gemäß Figur 4. Es ist bei der Statorschaufel 3.1 ein Bereich dargestellt, von dem Arbeitsmedium abströmt, und bei der Rotorschaufel 2.1 ein Bereich, zu dem Arbeitsmedium hinströmt. Demgemäß ist hier die Spitze 3.6 der Statorschaufel 3.1 aus der Längsmittelebene 3.5 der Schaufel versetzt. Sie liegt in der Ebene der seitlichen Begrenzungsfläche 3.4.

Die Schaufeln sind in bekannter Weise "spießend" angeordnet. Die Spitzen sind somit einander zugewandt. Die Schaufeln von Rotor und Stator sind in dieser Darstellung im wesentlichen miteinander fluchtend angeordnet.

Die erfindungsgemäße Anordnung führt zu einer Minimierung der Stoßverluste und damit zu einer deutlichen Steigerung von Wirkungsgrad und Laufruhe.

## Patentansprüche

1. Hydrodynamischer Retarder;
1.1 mit einem Rotor-Schaufelrad (2);
1.2 mit einem Stator-Schaufelrad (3);
1.3 in einem Zylinderschnitt gesehen sind die Schaufeln (2.1, 3.1) wie folgt gestaltet und angeordnet:
1.3.1 sie verlaufen in Ebenen, die gegen die Achse (1.1) der Maschine geneigt sind;
1.3.2 sie fluchten im wesentlichen miteinander;
1.3.3 sie sind angeschrägt, so daß sie eine Spitze (2.6, 3.6) bilden; **gekennzeichnet durch** die folgenden Merkmale:
1.4 die angeströmten Bereiche (Anströmbereich) der Schaufelkanten sind - in einem Zylinderschnitt gesehen - beidseits angeschrägt, so daß sich die Spitze (2.6, 3.6) zwischen den seitlichen Begrenzungsflächen (2.3, 2.4; 3.3, 3.4) der betreffenden Schaufel (2.1, 3.1) befindet, während die Abströmbereiche derselben Schautelkanten so angeschrägt sind, daß die Spitze in der Ebene der seitlichen Begrenzungsfläche (3.4) liegt.

2. Retarder nach Anspruch 1, **dadurch gekennzeichnet, daß** die Winkel zwischen der Schaufelmittelebene (2.5, 3.5) und der Ebene der Anschrägung zwischen 10 und 30° beträgt, vorzugsweise 20°.

3. Retarder nach einem der Ansprüche 1 bis 2, **dadurch gekennzeichnet, daß** die Länge der angeschrägten Fläche der Rotorschaufeln (2.1) - in einem Zylinderschnitt gesehen - auf der Schaufel-Druckseite zwischen 1 und 3 mm, und auf der druckabgewandten Seite zwischen 3 und 5 mm beträgt.

4. Retarder nach einem der Ansprüche 1 bis 3, **dadurch gekennzeichnet, daß** die Länge der angeschrägten Fläche der Statorschaufeln (3.1) - in einem Zylinderschnitt gesehen - auf der Schaufel-Druckseite - zwischen 8 und 12 mm, und auf der druckabgewandten Seite zwischen 14 und 20 mm beträgt.

5. Retarder nach einem der Ansprüche 1 bis 4, **dadurch gekennzeichnet, daß** das Stator-Schaufelrad (3) dicke und dünne Schaufeln (3.1) aufweist.

6. Retarder nach einem der Ansprüche 1 bis 5, **dadurch gekennzeichnet, daß** die dünnen Statorschaufeln im Anströmbereich die gleiche Schaufelform wie die der Rotorschaufeln im Anströmbereich aufweisen.

7. Retarder nach einem der Ansprüche 1 bis 6, **dadurch gekennzeichnet, daß** die Spitzen (2.6, 3.6) der Schaufeln (2.1, 3.1) gerundet sind.

## Claims

1. A hydrodynamic retarder
1.1 with a rotor blade wheel (2);
1.2 with a stator blade wheel (3);
1.3 the blades (2.1, 3.1) are configured and arranged as follows when seen in a cylindrical sectional view:
1.3.1 they extend in planes which are inclined against the axis (1.1) of the machine;
1.3.2 they are substantially flush with respect to each other;
1.3.3 they are beveled so that they form a tip (2.6, 3.6);
**characterized by** the following features:
1.4 the regions which are flowed against (flow regions) of the blade edges are beveled on both sides (as seen in a cylindrical sectional view), so that the tip (2.6, 3.6) is located between the lateral boundary surfaces (2.3, 2.4; 3.3, 3.4) of the respective blade (2.1, 3.1), while the flow-off regions of the same blade edges are beveled in such a way that the tip lies in the plane of the lateral boundary surface (3.4).

2. A retarder according to claim 1, **characterized in that** the angle between the central plane (2.5, 3.5) of the blade and the plane of the beveling is between 10 and 30°, preferably 20°.

3. A retarder according to one of the claims 1 to 2, **characterized in that** the length of the beveled surface of the rotor blades (2.1) is between 1 and 3 mm on the pressure side of the blade (as seen in a cylindrical sectional view), and between 3 and 5 mm on the side averted from the pressure.

4. A retarder according to one of the claims 1 to 3, **characterized in that** the length of the beveled surface of the stator blades (3.1) is between 8 and 12 mm on the pressure side of the blade (as seen in a cylindrical sectional view), and between 14 and 20 mm on the side averted from the pressure.

5. A retarder according to one of the claims 1 to 4, **characterized in that** the stator blade wheel (3) comprises thick and thin blades (3.1).

6. A retarder according to one of the claims 1 to 5, **characterized in that** the thin stator blades have the same shape of blade in the flow region as the rotor blades in the flow region.

7. A retarded according to one of the claims 1 to 6, **characterized in that** the tips (2.6, 3.6) of the blades (2.1, 3.1) are rounded off.

## Revendications

1. Ralentisseur hydrodynamique
1.1 avec une roue à pales de rotor (2) ;
1.2 avec une roue à pales de stator (3) ;
1.3 vues en coupe cylindrique, les pales (2.1, 3.1) sont formées et disposées de la façon suivante :
1.3.1 elles s'étendent dans des plans qui sont inclinés vers l'axe (1.1) de la machine ;
1.3.2 elles sont sensiblement alignées les unes par rapport aux autres ;
1.3.3 elles sont biseautées de manière à former une pointe (2.6, 3.6) ;
**caractérisé par** les particularités suivantes :
1.4 les régions d'attaque (zone d'attaque) des bords des pales sont, vues en coupe cylindrique, biseautées des deux côtés de sorte que la pointe (2.6, 3.6) se situe entre les surfaces de limitation latérales (2.3, 2.4 ; 3.3, 3.4) de la pale (2.1, 3.1) en question tandis que les zones de fuite des mêmes bords de pale sont biseautées de telle sorte que la pointe se situe dans le plan de la surface de limitation latérale (3.4).

2. Ralentisseur selon la revendication 1, **caractérisé en ce que** l'angle entre le plan médian de la pale (2.5, 3.5) et le plan du biseau est compris entre 10 et 30°, et est de préférence un angle de 20°.

3. Ralentisseur selon l'une quelconque des revendications 1 à 2, **caractérisé en ce que**, vue en coupe cylindrique, la longueur de la surface biseautée des pales de rotor (2.1), est comprise entre 1 et 3 mm sur le côté pression de la pale et entre 3 et 5 mm sur le côté détourné de la pression.

4. Ralentisseur selon l'une quelconque des revendications 1 à 3, **caractérisé en ce que**, vue en coupe cylindrique, la longueur de la surface biseautée des pales de stator (3.1) est comprise entre 8 et 12 mm sur le côté pression de la pale et entre 14 et 20 mm sur le côté détourné de la pression.

5. Ralentisseur selon l'une quelconque des revendications 1 à 4, **caractérisé en ce que** la roue à pales du stator (3) comporte des pales épaisses et des pales minces (3.1).

6. Ralentisseur selon l'une quelconque des revendications 1 à 5, **caractérisé en ce que**, dans la zone d'attaque, les pales minces du stator ont la même forme que les pales du rotor dans la zone d'attaque.

7. Ralentisseur selon l'une quelconque des revendications 1 à 6, **caractérisé en ce que** les pointes (2.6, 3.6) des pales (2.1, 3.1) sont arrondies.
